(19) **Europäisches Patentamt / European Patent Office / Office européen des brevets**

(11) **EP 3 348 820 A1**

(12) **EUROPEAN PATENT APPLICATION**

(43) Date of publication:
18.07.2018 Bulletin 2018/29

(51) Int Cl.:
*F02K 1/00* (2006.01)  *F02K 3/04* (2006.01)
*F04D 29/54* (2006.01)

(21) Application number: 17208475.8

(22) Date of filing: 19.12.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 17.01.2017 GB 201700777

(71) Applicant: **Rolls-Royce plc**
London SW1E 6AT (GB)

(72) Inventors:
• **Wilson, Mark**
  **Derby, Derbyshire DE24 8BJ (GB)**
• **Zamboni, Giulio**
  **Derby, Derbyshire DE24 8BJ (GB)**

(74) Representative: **Rolls-Royce plc**
**Intellectual Property Dept SinA-48**
**PO Box 31**
**Derby DE24 8BJ (GB)**

(54) **FAN EXHAUST FOR A GAS TURBINE ENGINE**

(57) A fan outlet assembly comprises a fan discharge nozzle having a radially inner platform, a radially outer platform arranged coaxially and in radial alignment with the radially inner platform and a circumferential array of outlet guide vanes (110) spanning an annulus defined by the radially inner platform and radially outer platform. An annular duct extends downstream from the circumferential array, the duct having a radially outer wall (112) contiguous with the radially outer platform and a radially inner wall (111) contiguous with the radially inner platform. In a region extending downstream from the circumferential array, the radially inner and outer platforms and/or the radially inner and outer walls having a non-axisymmetric surface bounding the duct. A non-axisymmetric surface may be applied to either or both of the radially outer and radially inner contiguous surfaces and may extend upstream as well as downstream of the circumferential array of outlet guide vanes.

**Fig. 11**

EP 3 348 820 A1

**Description**

The present invention concerns the geometry of a fan exhaust duct in a gas turbine engine.

In known gas turbine engine assemblies, a fan is arranged upstream from an engine core to draw air into the engine. Air discharged from the fan is in part channelled to a compressor section of the engine core. The air is compressed in the compressor section, mixed with fuel and ignited in a combustor section of the engine core downstream of the compressor. The combustion gases are channelled towards a turbine section and drive the turbines which in turn produce propulsion and drive rotation of components of the compressor.

A remainder of the discharged fan air is exhausted through a fan discharge nozzle along an annular bypass duct arranged coaxially with but radially outwardly of the engine core. Along with air output from the turbine section, this discharged fan air contributes to a propulsive force generated by the engine. Typically, the fan discharge nozzle comprises an outlet guide vane array arranged just downstream of the fan. The outlet guide vanes are configured to remove swirl from this portion of the fan discharge air resulting in a substantially axially directed flow at the outlet of the bypass duct.

The fan assembly often additionally includes structural support spanning the bypass duct. For example, multiple bifurcations may extend substantially radially across the duct housing structural, mechanical, electrical and/or hydraulic operating components. The bifurcations include radially extending walls shaped to guide air around these components in an aerodynamic fashion. Outlet guide vanes axially adjacent the bifurcations may be faired into the bifurcation to improve flow efficiency. Nevertheless, the presence of these radially spanning obstructions in the annular bypass duct still affects the circumferential continuity of the velocity and pressure distributions of air outlet by the fan, reducing the aerodynamic performance and efficiency of the outlet nozzle of the fan assembly.

It is desirable to further improve the aerodynamic performance of fan discharge air flow in the bypass duct.

In accordance with the present invention there is provided a fan outlet assembly comprising; a fan discharge nozzle having a radially inner platform, a radially outer platform arranged coaxially and in radial alignment with the radially inner platform and a circumferential array of outlet guide vanes spanning an annulus defined by the radially inner platform and radially outer platform and an annular duct extending downstream from the circumferential array, the annular duct having a radially outer wall contiguous with the radially outer platform and a radially inner wall contiguous with the radially inner platform,

wherein, in a region extending downstream from the circumferential array of outlet guide vanes the radially inner and outer platforms and/or the radially inner and outer walls have a non-axisymmetric surface bounding the annular duct.

In this context, the terms "annulus" and "annular" refer to a shape defined by mean values of the radii for the walls and platforms described which would prescribe concentric circles. The non-axisymmetric surfaces recited may be resultant from a profile applied to the circumferences of these circles.

The assembly may further comprise one or more bifurcations spanning the annular duct and spaced axially from the circumferential array of outlet guide vanes. The non-axisymmetric surface may extend at least between the circumferential array of outlet guide vanes and an axially adjacent end of the bifurcation.

The non-axisymmetric surfaces may incorporate circumferentially extending undulations. The non-axisymmetric surfaces may incorporate axially extending undulations. The circumferentially extending undulations may be non-uniform around the circumference. The undulations may be defined by waveforms. The waveforms may have a single harmonic. The waveforms may have multiple harmonics.

The assembly may further comprise a fairing panel arranged across an axial separation between a trailing edge of the outlet guide vane and an upstream end of the bifurcation. The fairing panel may be configured and arranged to blend walls of the outlet guide vane into walls of the bifurcation. In another option, an outlet guide vane is integrally formed with a bifurcation in a single component. Axially extending undulations of the non-axisymmetric surfaces may sit radially adjacent the fairing panel/integrally formed component. Undulations may also be present upstream of a trailing edge of the outlet guide vanes.

In some embodiments of the invention, the non-axisymmetric surfaces can be defined mathematically as follows:

$$radius_{inner} = f_0(x) + \sum_{ND=0}^{n} fs_{ND}(x,\vartheta) \cdot \sin(a_{ND} \cdot \vartheta) + \sum_{ND=0}^{n} fc_{ND}(x,\vartheta) \cdot \cos(a_{ND} \cdot \vartheta)$$

**Equation 1**

$$radius_{outer} = g_0(x) + \sum_{ND=0}^{n} gs_{ND}(x,\vartheta) \cdot \sin(a_{ND} \cdot \vartheta) + \sum_{ND=0}^{n} gc_{ND}(x,\vartheta) \cdot \cos(a_{ND} \cdot \vartheta)$$

**Equation 2**

Where:

x represents an axis of the annulus;

$radius_{inner}$ is a radius of the radially inner wall of the annular duct at a given position on axis x and azimuthal position $\vartheta$;

**$radius_{outer}$** is a radius of the radially outer wall of the annular duct at a given position on axis x and azimuthal position $\vartheta$ ;

ND is the engine order of an engine of which the duct forms part and is an integer varying from 0 up to a maximum value n;

$\vartheta$ is the azimuthal angle relative to a reference plane;

$f_0(x)$ and $g_0(x)$ respectively represent mean (axisymmetric) lines at the radially inner and radially outer walls of the annular duct;

$fs_{ND}(x,\vartheta)$, $fc_{ND}(x,\vartheta)$, $gs_{ND}(x,\vartheta)$, $gc_{ND}(x,\vartheta)$ are amplitude multiplying factors $a_{ND}$ are real numbers.

It will be appreciated functionally similar profiles can be obtained using different coordinate systems. For example a standard cylindrical co-ordinate system may be used in place of a Cartesian coordinate system.
For example (but without limitation) $fs_{ND}(x,\vartheta)$, $fc_{ND}(x,\vartheta)$, $gs_{ND}(x,\vartheta)$, $gc_{ND}(x,\vartheta)$, can have values from -15% to +15% of the duct height $g_0(x) - f_0(x)$. Optionally the values are from - 20% to +20% of the duct height. Optionally the values are within the range -8% to +8% of the duct height.
Some specific examples of non-axisymmetric surfaces include:

On a radially inner wall of the annular duct;

a) amplitude perturbations defined along the axial direction, i.e. $fs_{ND}(x)$ and $fc_{ND}(x)$ are functions of $x$

b) amplitude perturbations defined along the circumferential direction, i.e. $f_{SND}(\vartheta)$ and $fc_{ND}(\vartheta)$, are functions of $\vartheta$

c) a combination of a) and b).

On a radially outer wall of the annular duct;

d) amplitude perturbations defined along the axial direction, i.e. $gs_{ND}(x)$ and $gc_{ND}(x)$ are functions of x

e) amplitude perturbations defined along the axial direction, i.e. $gs_{ND}(\vartheta)$ and $gc_{ND}(\vartheta)$ are functions of $\vartheta$

f) a combination of d) and e).

Within a given duct, the non-axisymmetric surfaces may be defined by any of a) to f) taken individually or by any combination of a) to f). That is, either or both of the inner and outer radial walls may be provided with a non-axisymmetric surface and any non-axisymmetric surface may have one or both of circumferentially and axially extending perturbations.
The proposed profiles may serve to provide a better aerodynamic profile resulting in a more efficient flow of air outlet from assembly. The undulating profiles which extend circumferentially around the axial separation may each be defined by a single waveform. The waveforms may be identical for the two undulating surfaces. The waveforms need not essentially be identical for the two undulating surfaces. The waveforms for the two undulating surfaces may be in phase but need not essentially be in phase around their circumferences. The waveforms may comprise a single harmonic or multiple harmonics.
Selected waveform configurations may result in an increased pressure contributing to an increased thrust at an exit of the bypass duct.
Embodiments of the invention will now be further described with reference to the accompanying Figures in which;

Figure 1 shows a first fan outlet assembly of a gas turbine engine known from the prior art;
Figure 2 shows a second fan outlet assembly of a gas turbine engine known from the prior art;

Figure 3 shows a representative top view of the assemblies of Figures 1 and 2;
Figure 4 shows a third fan outlet assembly of a gas turbine engine known from the prior art;
Figure 5 shows a representative top view of the assembly of Figure 4;
Figure 6 shows a representative axial section of the arrangement of Figures 4 and 5;
Figure 7 shows a representative axial section of a first embodiment of the invention;
Figure 8 shows a representative axial section of a second embodiment of the invention;
Figure 9 shows a representative axial section of a third embodiment of the invention;
Figure 10 shows a representative axial section of a fourth embodiment of the invention;
Figure 11 shows a representative side view of a fifth embodiment of the invention;
Figure 12 shows a representative side view of a sixth embodiment of the invention;
Figure 13 shows a representative side view of a seventh embodiment of the invention;
Figure 14 shows a representative side view of an eighth embodiment of the invention.

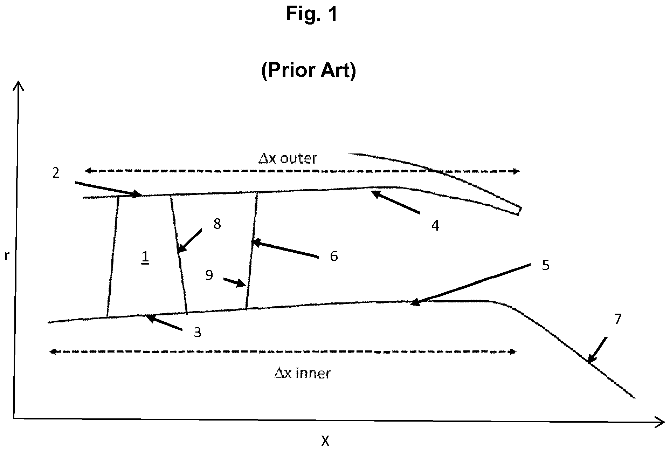

As can be seen in Figure 1, the fan outlet assembly comprises an outlet guide vane 1 which is one of a circumferential array of outlet guide vanes spanning an annulus, the array is bounded by a radially outer platform 2 and a radially inner platform 3. The radially outer platform is contiguous with a radially outer wall 4 of an engine bypass duct which extends axially downstream (with respect to the direction of flow of air through the fan) from the array. The radially inner platform is 3 is contiguous with a radially inner wall 5 of the bypass duct.

Spanning the bypass duct at a location downstream of the array is a bifurcation 6. The bifurcation may define a radially extending duct enclosing structural, mechanical, electrical and/or hydraulic operating components of the engine. The walls of the bifurcation are shaped to guide flow around such components aerodynamically. The radially inner wall 5 extends downstream to define the after body cone 7. The vane has a trailing edge 8 and there is an axial separation between the trailing edge 8 and an upstream end 9 of the bifurcation 6. The contiguous radially outer platform 2 and wall 4 together provide a substantially continuous surface.

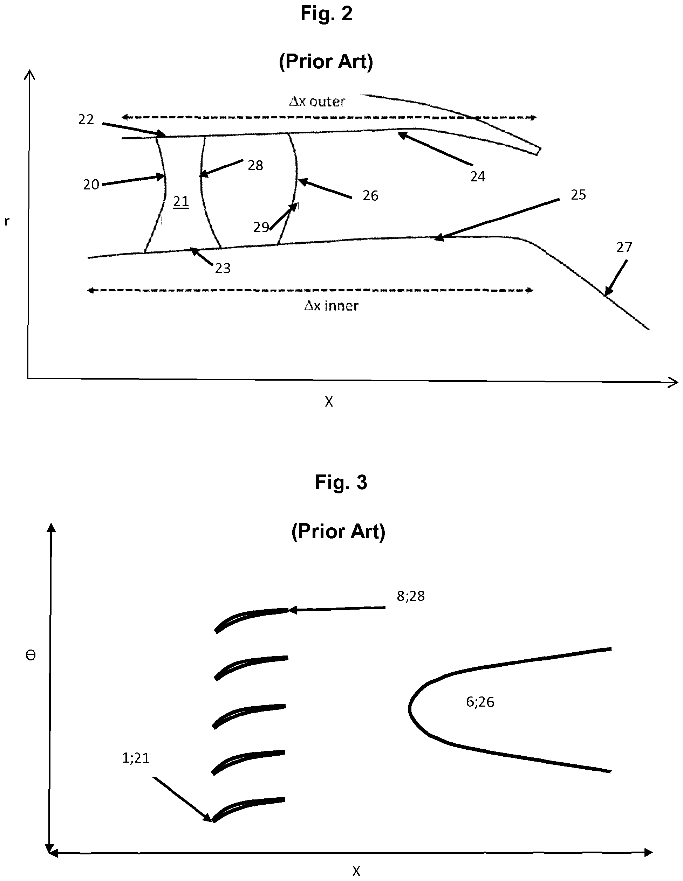

As can be seen, the assembly of Figure 2 is broadly similar to Figure 1 and comprises an outlet guide vane 21 which is one of a circumferential array of outlet guide vanes spanning an annulus, the array is bounded by a radially outer platform 22 and a radially inner platform 23. The radially outer platform is contiguous with a radially outer wall 24 of an engine bypass duct which extends axially downstream (with respect to the direction of flow of air through the fan) from the array. The radially inner platform is 23 is contiguous with a radially inner wall 25 of the bypass duct.

Spanning the bypass duct at a location downstream of the array is a bifurcation 26. The bifurcation may define a radially extending duct enclosing structural, mechanical, electrical and/or hydraulic operating components of the engine. The walls of the bifurcation are shaped to guide flow around such components aerodynamically. The radially inner wall 25 extends downstream to define the after body cone 27. The vane has a trailing edge 28 and there is an axial separation between the trailing edge 28 and an upstream end 29 of the bifurcation 26. The contiguous radially outer platform 22 and wall 24 together provide a substantially continuous surface.

In contrast to Figure 1, the trailing edge 28, upstream end 29 and a leading edge 20 of the vane are each curved rather than straight as shown in Figure 1.

Figure 3 shows a representative view looking down at the arrangements of Figure 1 and Figure 2. It will be appreciated that the curvature of the upstream end 29 and leading and trailing edges 20, 28 will not be visible in this view.

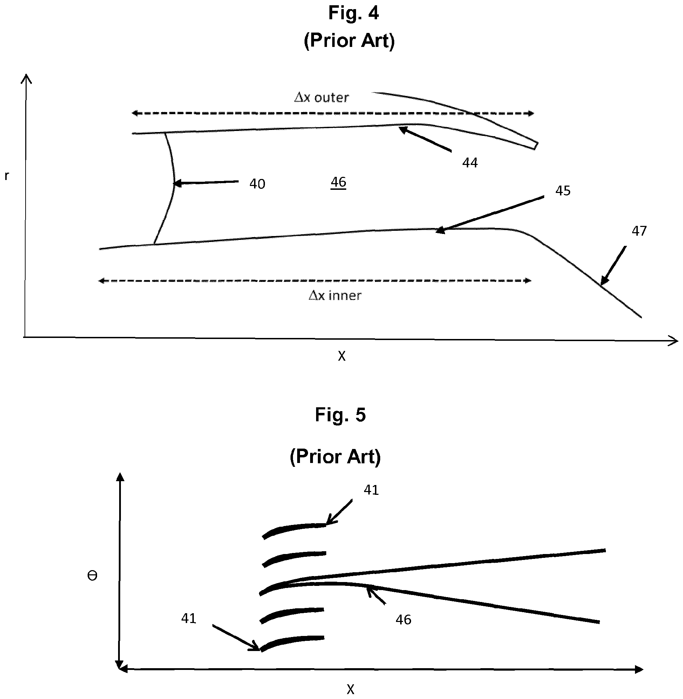

As shown in Figures 4 and 5 a vane 41 forming one of circumferential array of vanes 41 has a leading edge 40 and is integrally formed with a bifurcation 46. The integrally formed component extends continuously axially and radially between a radially outer wall 44 and a radially inner wall 45. Radially inner wall 45 continues to form the after body cone 47.

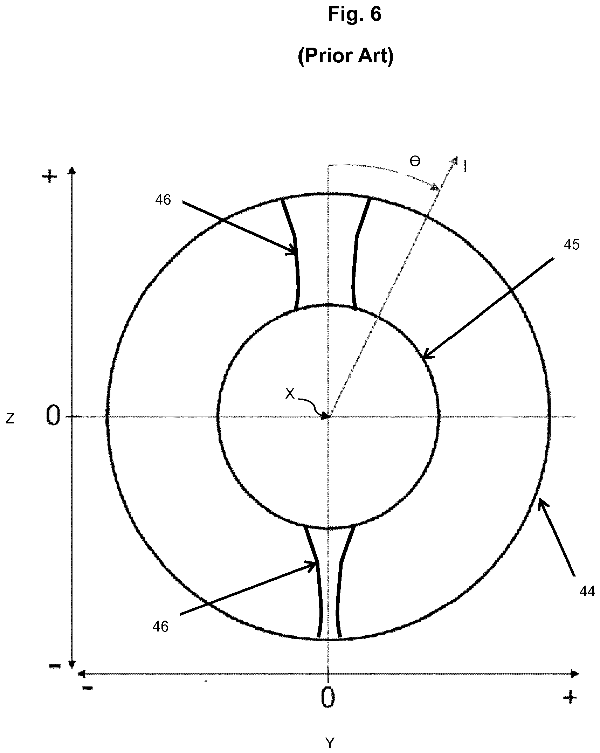

As can be seen in Figure 6, in axial section, the duct bounded by radially outer wall 44 and radially inner wall 45 is axi-symmetric, that is the walls 44, 45 form two concentric circles arranged with an axis X at their centre.

As is apparent from Figures 1 to 6, a fan outlet assembly and more particularly a bypass duct of such an assembly can be defined in three dimensions with reference to the shown Cartesian coordinates defined by mutually orthogonal axes X, Y and Z and a cylindrical coordinate system defined by X, radius r and azimuth angle $\theta$.

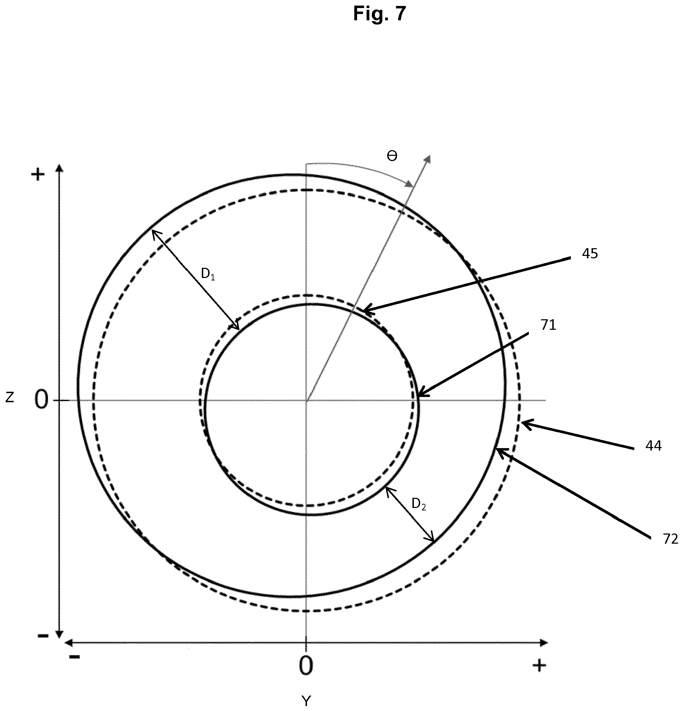

The three dimensional shape of the radially inner and radially outer wall surfaces can be applied to the circumferential portion or to the entire duct along a given axial extent at the inner ($\Delta x\ inner$) and the outer ($\Delta x\ outer$) as illustrated in the Figures 7 to 14 which show some embodiments of the invention. The maximum extent of $\Delta x\ inner$ and $\Delta x\ outer$ can go from the trailing edge of an upstream fan blade at an upstream extreme and to the exit of the bypass duct at a downstream extreme. The non-axisymmetric wall shaping may extend for any portion of this maximum extent and may be present on one or both of the radially inner and radially outer walls.

Figure 7, Figure 8, Figure 9 and Figure 10 show possible axial section results of the radially inner and outer wall profiles. The profiles have been defined applying the Equations 1 and 2 as set out above. It is to be appreciated that these figures show a given axial location and the results can be different at another axial location along the X axis. For clarity, the bifurcation and vanes are not shown in the figures (though their positions are represented in Figure 6).

In Figures 7 to 10, the dotted outlines represent mean (axisymmetric) lines at the radially inner 45 and radially outer 44 walls of the duct; alternatively these could be considered to be the walls of an axisymmetric annular duct before the shaping functions have been applied to the walls. The solid lines show the walls of a duct in accordance with a fan outlet assembly of the invention.

In the embodiment of Figure 7, walls 71 and 72 are shifted out of phase with each other. The result is that, at the axial location shown, the duct is wider across one side $D_1$ than it is in a diametrically opposite position $D_2$.

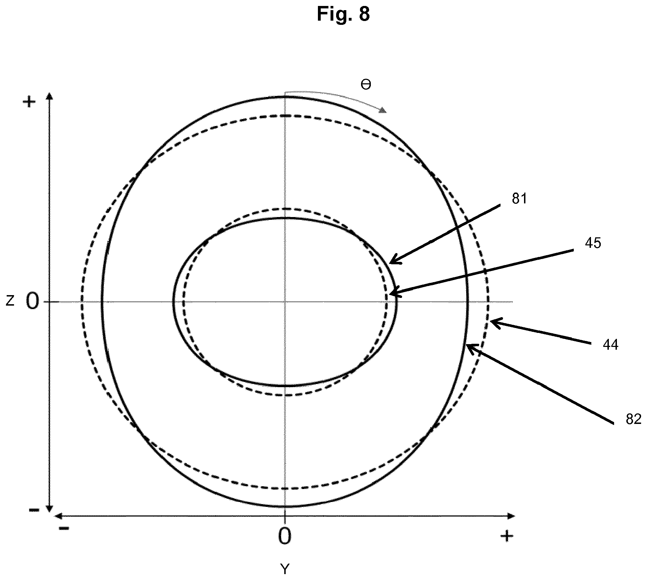

In the embodiment of Figure 8, the inner wall 81 is distorted into an oval form having a larger dimension in the Y axis than in the Z axis. Similarly the outer wall 82 is distorted into an oval form but is around 90 out of phase with the inner wall and has a larger dimension in the Z axis than in the Y axis. Consequently, the duct is wider in the Z direction than it is in the Y direction.

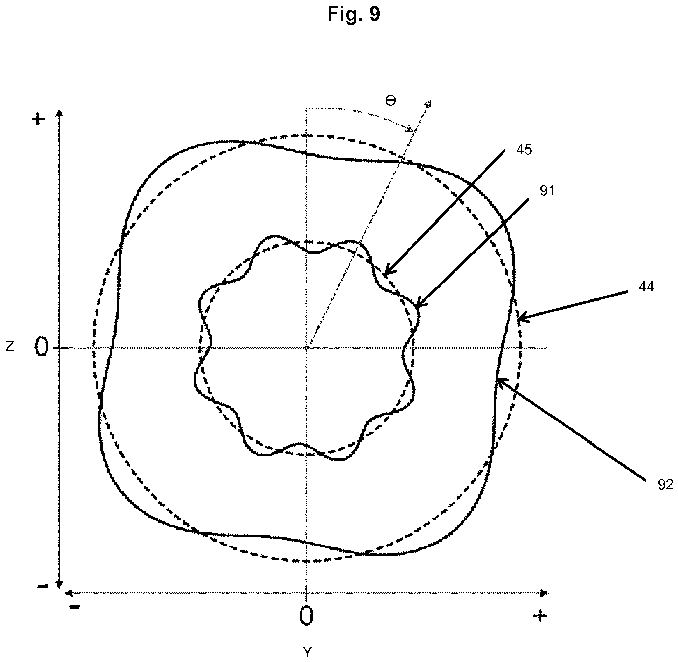

In the embodiment of Figure 9 different order functions are applied to inner wall 91 and outer wall 92. The inner wall 91 presents an eight lobed profile and the outer wall 92 a four lobed profile, each centred on the X axis.

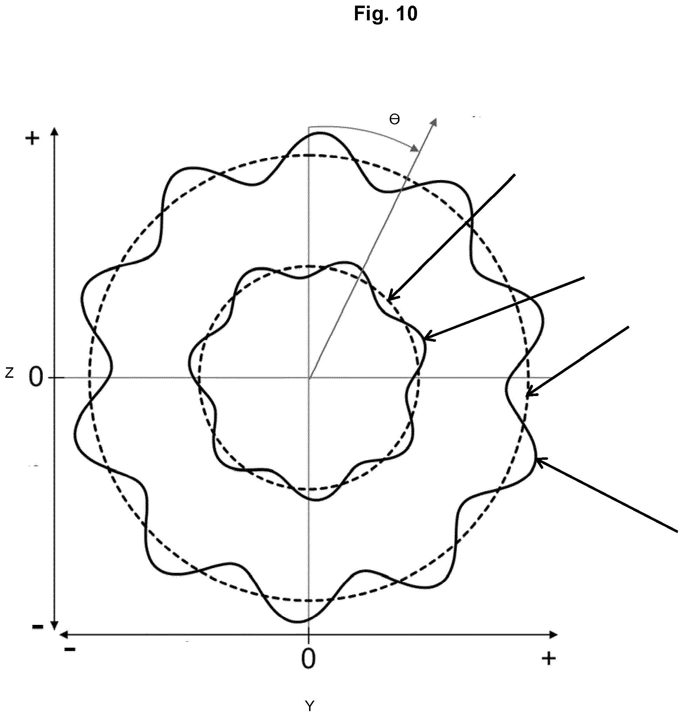

In the embodiment of Figure 10 different order functions are applied to inner wall 101 and outer wall 102. The inner wall 101 presents a seven lobed profile and the outer wall 102 a ten lobed profile, each centred on the X axis.

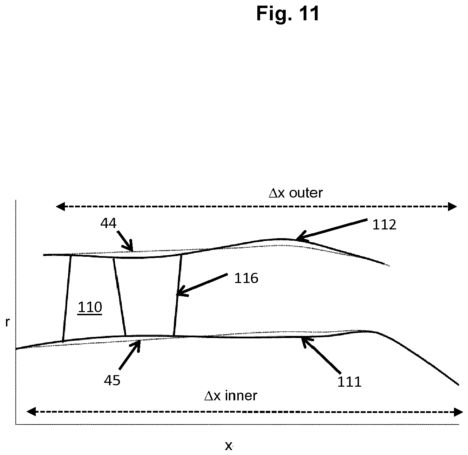

In Figure 11, Figure 12, Figure 13 and Figure 14 show possible axial section results of the radially inner and outer wall profiles. The profiles have been defined applying the Equations 1 and 2 as set out above. It is to be appreciated that these figures show a given constant θ location and the results may be different at another θ location along the circumferential direction θ of the represented duct.

In Figures 11 to 14 the dotted outlines represent mean (axisymmetric) lines at the radially inner 45 and radially outer 44 walls of the duct; alternatively these could be considered to be the walls of an axisymmetric annular duct before the shaping functions have been applied to the walls. The solid lines show the walls of a duct in accordance with a fan outlet assembly of the invention.

In the outlet assembly of Figure 11, a vane 110 of a circumferential array of vanes sits upstream from a bifurcation 116. A curvature is applied to each of the inner wall 111 and outer wall 112, the curvature in each case commencing upstream of the array and extending to a downstream end of the duct. It will be noted that the waveforms which define the curvature of the walls 111 and 112 are out of phase resulting in the width of the duct varying along the X axis. The waveforms have a similar pitch.

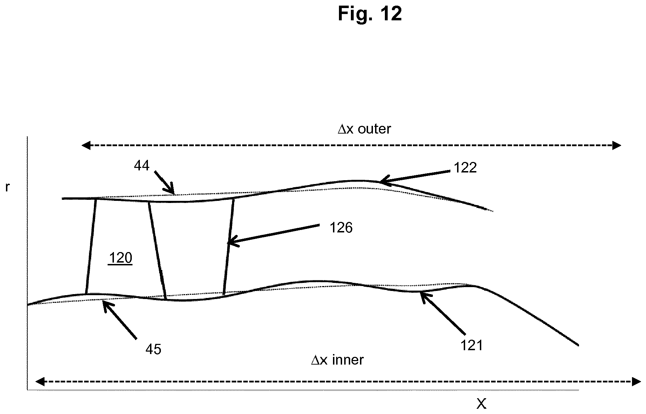

In the outlet assembly of Figure 12 a vane 120 of a circumferential array of vanes sits upstream from a bifurcation 136. A curvature is applied to each of the inner wall 121 and outer wall 122, the curvature in each case commencing upstream of the array of vanes and extending to a downstream end of the duct. It will be noted that the waveforms which define the curvature of the walls 121 and 122 are out of phase resulting in the width of the duct varying along the X axis. The waveform applied to the inner wall 121 has a pitch approximately twice that of the pitch of the waveform of the outer wall 122.

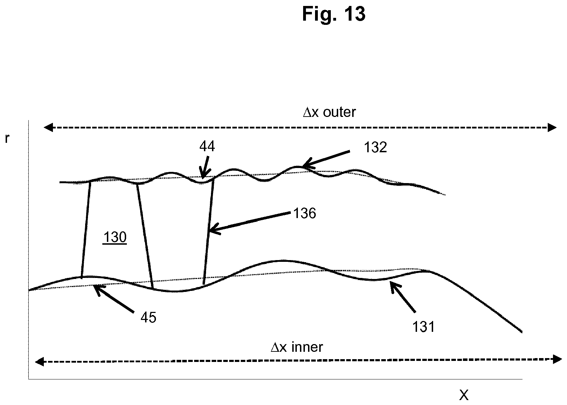

In the outlet assembly of Figure 13 a vane 130 of a circumferential array of vanes sits upstream from a bifurcation 136. A curvature is applied to each of the inner wall 131 and outer wall 132, the curvature in each case commencing upstream of the circumferential array of vanes and extending to a downstream end of the duct. It will be noted that the waveforms which define the curvature of the walls 131 and 132 are out of phase resulting in the width of the duct varying along the X axis. The waveform applied to the outer wall 132 has a pitch approximately thrice that of the pitch of the waveform of the inner wall 131.

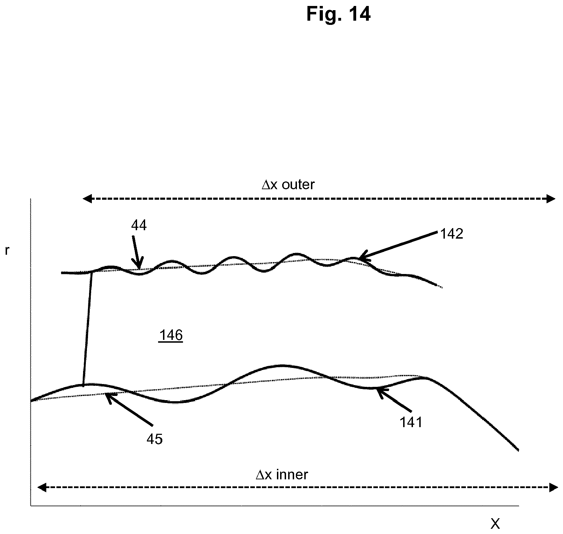

In the outlet assembly of Figure 14 an integrated vane and bifurcation component 146 extends from a circumferential array of vanes axially along a duct defined by inner wall 141 and outer wall 142. A curvature is applied to each of the inner wall 141 and outer wall 142, the curvature in each case commencing upstream of the component 146 and extending to a downstream end of the duct. It will be noted that the waveforms which define the curvature of the walls 141 and 142 are out of phase resulting in the width of the duct varying along the X axis. The waveform applied to the outer wall 142 has a pitch approximately thrice that of the pitch of the waveform of the inner wall 141.

It will be understood that the invention is not limited to the embodiments above-described and various modifications and improvements can be made without departing from the invention as is defined by the appended claims. Except where mutually exclusive, any of the features may be employed separately or in combination with any other features and the disclosure extends to and includes all combinations and sub-combinations of one or more features described herein.

**Claims**

1. A fan outlet assembly comprising;
   a fan discharge nozzle having a radially inner platform, a radially outer platform arranged coaxially and in radial alignment with the radially inner platform and a circumferential array of outlet guide vanes (110) spanning an annulus defined by the radially inner platform and radially outer platform and an annular duct extending downstream from the circumferential array, the annular duct having a radially outer wall (112) contiguous with the radially outer platform and a radially inner wall (111) contiguous with the radially inner platform, wherein,

in a region extending downstream from the circumferential array the radially inner and outer platforms and/or the radially inner and outer walls have a non-axisymmetric surface bounding the annular duct.

2. A fan outlet assembly as claimed in claim 1 further comprising one or more bifurcations (116) spanning the annular duct and spaced axially from the circumferential array of outlet guide vanes (110).

3. A fan outlet assembly as claimed in claim 2 wherein the non-axisymmetric surface bounding the annular duct extends at least between the circumferential array of outlet guide vanes and an axially adjacent end of the bifurcation (116).

4. A fan outlet assembly as claimed in claim 2 or 3 further comprising a fairing panel arranged across an axial separation between a trailing edge of the outlet guide vane and an upstream end of the bifurcation.

5. A fan outlet assembly as claimed in claim 4 wherein the fairing panel is configured and arranged to blend walls of the outlet guide vane into walls of the bifurcation (146).

6. A fan outlet assembly as claimed in any preceding claim wherein the non-axisymmetric surfaces incorporate circumferentially extending undulations.

7. A fan outlet assembly as claimed in any preceding claim wherein the non-axisymmetric surfaces incorporate axially extending undulations.

8. A fan outlet assembly as claimed in claim 6 or 7 wherein the undulations are defined by waveforms.

9. A fan outlet assembly as claimed in claim 8 wherein the waveforms are correlated to the engine order of a gas turbine engine of which the fan outlet assembly comprises a part.

10. A fan outlet assembly as claimed in claim 9 wherein the waveforms are also correlated to a mean annulus line of the annular duct.

11. A fan outlet assembly as claimed in any preceding claim wherein the non-axisymmetric surfaces are defined by a series of sinusoidal shapes.

12. A fan outlet assembly as claimed in any preceding claim wherein the non-axisymmetric surfaces are defined mathematically using the equations;

$$radius_{inner} = f_0(x) + \sum_{ND=0}^{n} fs_{ND}(x,\vartheta) \cdot \sin(a_{ND} \cdot \vartheta) + \sum_{ND=0}^{n} fc_{ND}(x,\vartheta) \cdot \cos(a_{ND} \cdot \vartheta)$$

**Equation 3**

$$radius_{outer} = g_0(x) + \sum_{ND=0}^{n} gs_{ND}(x,\vartheta) \cdot \sin(a_{ND} \cdot \vartheta) + \sum_{ND=0}^{n} gc_{ND}(x,\vartheta) \cdot \cos(a_{ND} \cdot \vartheta)$$

**Equation 4**

Where:

$x$ represents an axis of the annulus;
**$radius_{inner}$** is a radius of the radially inner wall of the annular duct at a given position on axis x and azimuthal position $\vartheta$;
**$radius_{outer}$** is a radius of the radially outer wall of the annular duct at a given position on axis x and azimuthal position $\vartheta$;
ND is the engine order of an engine of which the duct forms part and is an integer varying from 0 up to a maximum value n;

$\vartheta$ is the azimuthal angle relative to a reference plane;

$f_0(x)$ and $g_0(x)$ respectively represent mean (axisymmetric) lines at the radially inner and radially outer walls of the annular duct;

$fs_{ND}(x, \vartheta)$, $fc_{ND}(x, \vartheta)$, $gs_{ND}(x, \vartheta)$, $gc_{ND}(x, \vartheta)$ are amplitude multiplying factors $a_{ND}$ are real numbers.

13. A fan outlet assembly as claimed in claim 12 wherein $fs_{ND}(x, \vartheta)$, $fc_{ND}(x, \vartheta)$, $gs_{ND}(x, \vartheta)$, $gc_{ND}(x, \vartheta)$ have values which fall within a range from -15% to +15% of the duct height $g_0(x) - f_0(x)$.

14. A gas turbine engine incorporating a fan outlet assembly as claimed in any preceding claim arranged co-axially with an engine core and downstream of a fan.

15. A gas turbine engine as claimed in claim 14 wherein additional radially inner and radially outer walls extend upstream from a leading edge of the circumferential array to a trailing edge of the fan and one or both of the additional radially inner and radially outer walls have a non-axisymmetric surface.

# Fig. 1

# (Prior Art)

# Fig. 2

## (Prior Art)

# Fig. 3

## (Prior Art)

## Fig. 4
## (Prior Art)

## Fig. 5

## (Prior Art)

## Fig. 6

## (Prior Art)

**Fig. 7**

**Fig. 8**

**Fig. 9**

# Fig. 10

**Fig. 11**

Δx outer

44

112

116

110

r

45

111

Δx inner

x

# Fig. 12

Δx outer

r

44

122

126

120

45

121

Δx inner

X

# Fig. 13

Δx outer

r

44

132

136

130

45

131

Δx inner

X

# Fig. 14

Europäisches
Patentamt

European
Patent Office

Office européen
des brevets

# EUROPEAN SEARCH REPORT

**Application Number**

EP 17 20 8475

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/232954 A1 (CLEMEN CARSTEN [DE]) 16 September 2010 (2010-09-16) | 1-14 | INV. F02K1/00 F02K3/04 F04D29/54 |
| Y | * paragraph [0008] * * paragraph [0020] - paragraph [0025]; figures 1-8 * | 15 | |
| X | US 3 806 067 A (KUTNEY J) 23 April 1974 (1974-04-23) * column 3, line 67 - column 4, line 51; figures 1,4 * | 1-5,14 | |
| X | FR 3 012 417 A1 (SNECMA [FR]) 1 May 2015 (2015-05-01) * page 8 - page 9; figure 5 * | 1,14 | |
| Y | US 2016/130959 A1 (BARALON STEPHANE MICHEL MARCEL [GB]) 12 May 2016 (2016-05-12) * paragraph [0059] - paragraph [0075]; figures 3-8 * | 15 | |

|  |
|---|
| TECHNICAL FIELDS SEARCHED (IPC) |
| F02K F04D F01D |

The present search report has been drawn up for all claims

| Place of search | Date of completion of the search | Examiner |
|---|---|---|
| The Hague | 23 May 2018 | Robelin, Bruno |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 20 8475

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2018

| Patent document cited in search report | | Publication date | Patent family member(s) | | Publication date |
|---|---|---|---|---|---|
| US 2010232954 | A1 | 16-09-2010 | DE 102009011924 A1<br>EP 2233726 A2<br>US 2010232954 A1 | | 16-09-2010<br>29-09-2010<br>16-09-2010 |
| US 3806067 | A | 23-04-1974 | CA 955411 A<br>US 3806067 A | | 01-10-1974<br>23-04-1974 |
| FR 3012417 | A1 | 01-05-2015 | NONE | | |
| US 2016130959 | A1 | 12-05-2016 | EP 3020951 A1<br>US 2016130959 A1 | | 18-05-2016<br>12-05-2016 |

EPO FORM P0459